# EUROPÄISCHE PATENTSCHRIFT

(11) **EP 1 929 973 B1**
(45) Veröffentlichungstag und Bekanntmachung des Hinweises auf die Patenterteilung: **22.06.2011**
(21) Anmeldenummer: 07022975.2
(22) Anmeldetag: 27.11.2007
(51) Int. Cl.: A61C 3/02, A61B 17/16, B23B 31/00

(54) **Instrumentenschaft für ein rotierendes Instrument**
Instrument shaft for a rotating instrument
Axe d'instrument pour un instrument rotatif

(30) Priorität: 05.12.2006 DE 202006018407 U
(43) Veröffentlichungstag der Anmeldung: 11.06.2008
(73) Patentinhaber: Gebr. Brasseler GmbH & Co. KG, D-32657 Lemgo (DE)
(72) Erfinder: Danger, Karl-Heinz, 32758 Detmold (DE)
(74) Vertreter: Weber, Joachim

(56) Entgegenhaltungen:
- DE-U1- 20 314 717
- US-A1- 2002 028 422

## Beschreibung

Die Erfindung bezieht sich auf einen Instrumentenschaft für ein rotierendes Instrument, welcher aus einem keramischen Werkstoff gefertigt ist.

Rotierende Instrumente, insbesondere zahnärztliche Instrumente oder Dentalinstrumente, werden üblicherweise aus metallischen Werkstoffen gefertigt.

Der Schaft, der in eine Antriebseinheit, beispielsweise ein Winkelstück, eingesteckt wird, muss dabei sowohl axial fixiert als auch zur Einleitung eines Drehmoments geeignet gehalten werden. Die Dimensionierungen der Instrumentenschäfte ergeben sich nach ISO 1797.

Bei der Fertigung von Instrumentenschäften aus Spezialkeramik ergeben sich hinsichtlich der Materialeigenschaften besondere Anforderungen. Dabei ist insbesondere zu berücksichtigen, dass scharfe Kanten, welche eine Kerbwirkung haben, zu Versagensrissen führen können.

Aus der DE 203 14 717 U1 ist ein gattungsbildendes Instrument bekannt, bei welchem ein scharfkantiger Flächenübergang vorgesehen ist. Eine ähnliche Konstruktion zeigt auch die US 2002/028422 A1.

Der Erfindung liegt die Aufgabe zugrunde, einen Instrumentenschaft aus einem keramischen Werkstoff zu schaffen, welcher mit ISO 1797 kompatibel ist und sich durch gute Materialeigenschaften in Verbindung mit einer langen Lebensdauer auszeichnet.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit vorgesehen, dass an dem Übergangsbereich der Mitnehmerfläche zum zylindrischen Schaftende eine mit einem teilkreisförmigen Querschnitt versehene Nut ausgebildet ist.

Der erfindungsgemäße Instrumentenschaft zeichnet sich durch ein hohes Maß an mechanischer Stabilität aus und weist eine geringe bis keine Rissanfälligkeit auf, da durch die Nut Spannungsspitzen beim Übergang vom zylindrischen Schaft zu der abgeflachten, ebenen Mitnehmerfläche vermieden werden.

Erfindungsgemäß ist somit eine Erhöhung des Torsionsmoments um mindestens 20 % möglich. Dies führt zu einer erhöhten Betriebssicherheit sowie zu einer Verlängerung der Lebensdauer der Instrumente.

Erfindungsgemäß ist somit vorgesehen, dass die Nut im Übergangsbereich zwischen der ebenen Mitnehmerfläche und einem sich in radialer Richtung erstreckenden, ebenfalls im Wesentlichen ebenen Ende des zylindrischen Bereichs des Schaftendes angeordnet ist.

In bevorzugter Ausgestaltung ist erfindungsgemäß die Nut gerade ausgebildet und erstreckt sich somit quer über die gesamte Breite der Mitnehmerfläche.

Hinsichtlich der Anordnung der Nut, insbesondere hinsichtlich der Anordnung der Mittelachse der Nut, ergeben sich erfindungsgemäß unterschiedliche Varianten, die abhängig von der Dimension des Schaftendes und/oder dem Werkstoff ausgewählt werden können.

So ist es erfindungsgemäß möglich, die Mittelachse der Nut so anzuordnen, dass die Nut radial im Endbereich der Mitnehmerfläche angeordnet ist und sich somit nicht in die radiale Kante oder Fläche des zylindrischen Teils des Schaftendes erstreckt. In entsprechender Weise ist es erfindungsgemäß auch möglich, die Nut nicht in die Mitnehmerfläche einzusenken, sondern ausschließlich in die Endkante oder Endfläche des zylindrischen Schaftbereichs einzubringen.

Erfindungsgemäß ist es weiterhin möglich, die Nut schräg einzubringen, so dass sie sich sowohl in die Mitnehmerfläche als auch in den radialen Bereich des Schaftendes erstreckt.

Weiterhin ist es erfindungsgemäß möglich, die Nut mit einer Auslaufschräge zu versehen, die entweder in Richtung der Mitnehmerfläche oder in Richtung der radialen Fläche des Schaftendes angeordnet ist.

In einer Weiterbildung der Erfindung ist es auch möglich, die Nut als Ringnut auszubilden, welche sich von den seitlichen Bereichen der Mitnehmerfläche aus erstreckt.

Die beim Betrieb des Instrumentes auftretende Spannungsbelastung kann erfindungsgemäß durch folgende Aspekte erheblich verbessert werden:
Ein ideales Verhältnis von Einstichtiefe der Nut zu dem Schaftdurchmesser des Schaftendes liegt in einem Bereich von 0,05/2,35 bis 0,5/2,35. Ein besonders bevorzugter Bereich ergibt sich von 0,05/2,35 bis 0,2/2,35. Die Werte sind jeweils in mm angegeben, wobei bei diesem Beispiel ein Schaftdurchmesser von 2,35 mm zugrundegelegt wird. Bei einer Änderung des Schaftdurchmessers ergeben sich entsprechend gewandelte Werte.

Besonders günstig ist es erfindungsgemäß auch, wenn das Verhältnis von Einstichbreite (Breite der Nut) zur Länge der Mitnehmerfläche sich zwischen 0,1/2,6 bis 0,8/2,6 bewegt. Dabei ist es besonders bevorzugt, wenn der Bereich zwischen 0,2/2,6 bis 0,4/2,6 beträgt. Auch hierbei sind die Werte in mm angegeben. Das Verhältnis ist bei größeren oder kleineren Schäften demgemäß entsprechend zu ändern.

Der Radius der Nut beträgt erfindungsgemäß bevorzugterweise zwischen 0,15 und 0,2 mm.

Aus den oben genannten Werten und Verhältnissen ergeben sich optimierte Verhältnisse für die Krafteinleitung und die Spannungsverteilung.

Die Erfindung ist auf alle Instrumente aus Hochleistungskeramik (auch technische Keramik oder Ingenieurkeramik genannt) anwendbar. Hierunter fallen insbesondere einstoffige als auch mehrstoffige Oxidkeramiken, die sowohl als Mischoxidkeramik oder Dispersionskeramik vorliegen können. Beispiele hierfür sind Aluminiumoxidkeramik, Zirkondioxidkeramik, Magnesiumoxid oder Titandioxid.

Besonders günstig ist es, wenn erfindungsgemäß der spannungsmäßig besonders belastete Bereich des Instrumentenschafts, nämlich insbesondere der Bereich der Nut (4) mit einem durch Kugelstrahlen verdichteten Gefüge versehen ist. Hierdurch ergibt sich eine Verdichtung der Oberfläche, welche in einer erhöhten Festigkeit resultiert. Zum Kugelstrahlen kann beispielsweise Korund oder Aluminiumoxid eingesetzt werden.

Im Folgenden wird die Erfindung anhand von Ausführungsbeispielen in Verbindung mit der Zeichnung beschrieben. Dabei zeigen:
- Fig. 1 bis 6: Seitenansichten unterschiedlicher Ausgestaltungsbeispiele des erfindungsgemäßen Schaftendes des Instrumentenschafts,
- Fig. 7: eine Darstellung, analog den Fig. 1 bis 6, aus welcher sich die Dimensionierungen ersehen lassen,
- Fig. 8 und 9: perspektivische Darstellungen, analog den Ausführungsbeispielen der Fig. 1 bis 6, und
- Fig. 10: eine perspektivische Darstellung eines als Bohrer ausgebildeten Instruments mit dem erfindungsgemäßen Instrumentenschaft.

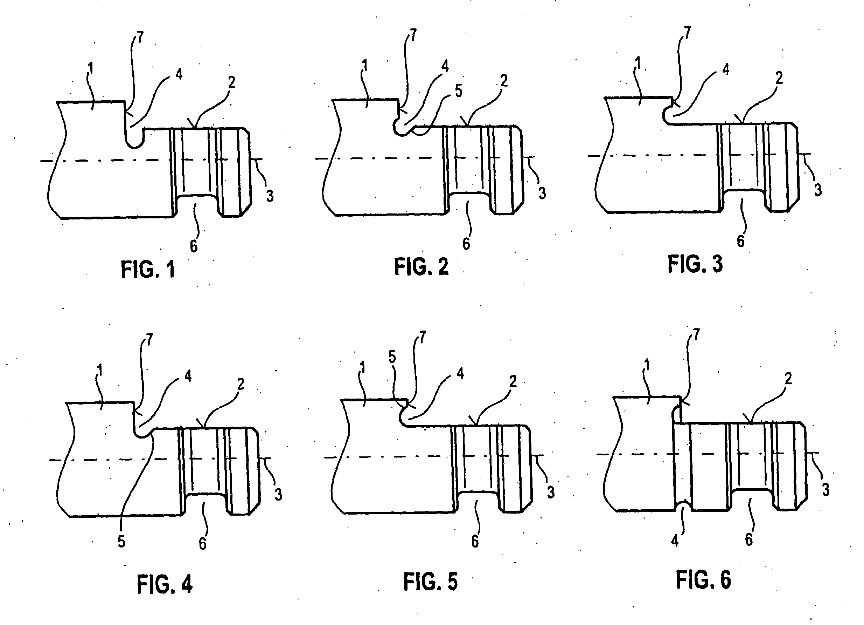

In den Figuren 1 bis 6 sind gleiche Teile jeweils mit gleichen Bezugsziffern versehen.

Erfindungsgemäß ist der Instrumentenschaft zylindrisch ausgebildet und umfasst ein zylindrisches Schaftende 1 mit einer Mittelachse 3. An dem Schaftende 1 ist eine Mitnehmerfläche 2 ausgebildet, welche sich parallel zur Mittelachse 3 erstreckt und welche nach ISO 1797 dimensioniert ist.

Weiterhin umfasst das Schaftende 1 eine Axialnut 6 zur axialen Sicherung des Instrumentenschafts. Auch diese ist gemäß ISO 1797 ausgebildet.

Erfindungsgemäß ist, wie in den Fig. 1-5 dargestellt, eine Nut 4 vorgesehen, welche geradlinig ausgebildet ist und deren Mittelachse somit parallel zur Mitnehmerfläche 2 verläuft. Die Nut 4 ist am Übergangsbereich der Mitnehmerfläche 2 zu einem radialen Bereich bzw. einer radialen Fläche 7 des Schaftendes 1 angeordnet.

Die Fig. 1 zeigt ein Ausführungsbeispiel, bei welchem die Nut 4 in die Mitnehmerfläche 2 eingesenkt ist, während die radiale Fläche 7 sich an den Randbereich der teilkreisförmigen Nut 4 anschließt.

Bei dem Ausführungsbeispiel der Fig. 2 ist die Nut 4 so angeordnet, dass sie sowohl in die Mitnehmerfläche 4 als auch in die radiale Fläche 7'eingebracht ist.

Bei dem Ausführungsbeispiel der Fig. 3 erstreckt sich die Nut 4 ausschließlich in die radiale Fläche 7, so dass der Rand der teilkreisförmigen oder halbkreisförmigen Nut 4 direkt in die Mitnehmerfläche 2 übergeht.

Bei den Ausführungsbeispielen der Fig. 4 und 5 ist jeweils zusätzlich eine Auslaufschräge 5 vorgesehen, welche entweder in die Mitnehmerfläche 2 übergeht (Fig. 4) oder in die radiale Fläche 7 (Fig. 5).

Das Ausführungsbeispiel der Fig. 6 stellt eine weitere erfindungsgemäße Variante dar, bei welcher die Nut 4 als Ringnut ausgebildet ist, welche sich vom seitlichen Übergang der Mitnehmerfläche 2 aus um das Schaftende 1 erstreckt.

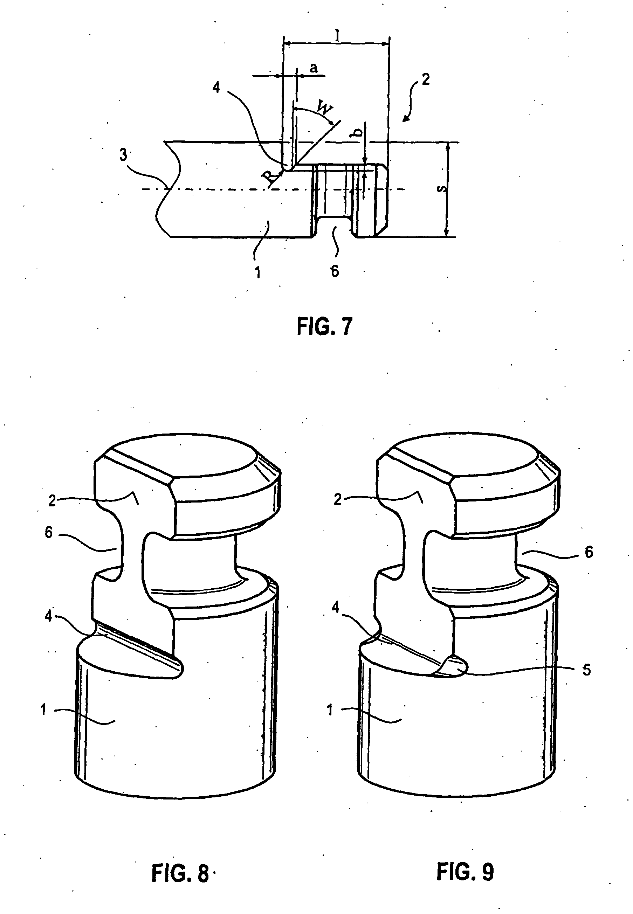

Die Fig. 7 zeigt eine bemaßte Darstellung des erfindungsgemäßen Instrumentenschafts, dabei bedeuten:
- 1: Länge der Mitnehmerfläche 2
- s: Schaftdurchmesser des Schaftendes 1
- a: Einstichbreite der Nut 4
- b: Einstichtiefe der Nut 4
- W: Winkel der Auslaufschräge 5
- R: Radius der Nut 4.

Die Fig. 8 und 9 zeigen perspektivische Darstellungen analog den Fig. 1 bis 6.

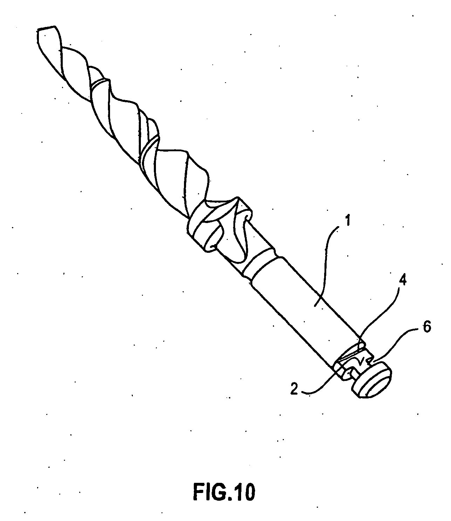

Die Fig. 10 zeigt eine perspektivische Darstellung eines als Spiralbohrer ausgebildeten rotierenden Instruments mit einem Instrumentenschaft gemäß einem der Ausführungsbeispiele der Erfindung.

### Bezugszeichenliste

- 1: Schaftende
- 2: Mitnehmerfläche
- 3: Mittelachse
- 4: Nut
- 5: Auslaufschräge
- 6: Axialnut
- 7: Radialer Bereich/Fläche vom Schaftende 1
- 1: Länge der Mitnehmerfläche 2
- s: Schaftdurchmesser des Schaftendes 1
- a: Einstichbreite der Nut 4
- b: Einstichtiefe der Nut 4
- W: Winkel der Auslaufschräge 5
- R: Radius der Nut 4.

## Patentansprüche

1. Dental-Instrumentenschaft für ein rotierendes Instrument, welcher aus einem keramischen Werkstoff gefertigt ist und ein zylindrisches Schaftende (1) umfasst, welches mit einer ebenen Mitnehmerfläche (2) versehen ist, welche parallel zur Mittelachse (3) des zylindrischen Schaftendes (1) angeordnet ist, **dadurch gekennzeichnet, dass** am Übergangsbereich der Mitnehmerfläche (2) zum zylindrischen Schaftende (1) eine mit einem teilkreisförmigen Querschnitt versehene Nut (4) ausgebildet ist.

2. Instrumentenschaft nach Anspruch 1, **dadurch gekennzeichnet, dass** die Nut (4) gerade ausgebildet ist.

3. Instrumentenschaft nach Anspruch 1 oder 2, **dadurch gekennzeichnet, dass** die Mittelachse der Nut (4) parallel zur Mitnehmerfläche (2) angeordnet ist.

4. Instrumentenschaft nach einem der Ansprüche 1 bis 3, **dadurch gekennzeichnet, dass** die Nut (4) radial im Endbereich der Mitnehmerfläche (2) eingebracht ist.

5. Instrumentenschaft nach einem der Ansprüche 1 bis 3, **dadurch gekennzeichnet, dass** die Nut axial im Endbereich (7) des Schaftendes (1) eingebracht ist.

6. Instrumentenschaft nach einem der Ansprüche 1 bis 3, **dadurch gekennzeichnet, dass** die Nut schräg im Endbereich der Mitnehmerfläche (2) und dem Endbereich (7) des Schaftendes (1) eingebracht ist.

7. Instrumentenschaft nach einem der Ansprüche 1 bis 6, **dadurch gekennzeichnet, dass** die Nut (4) in zumindest eine Auslaufschräge (5) übergeht.

8. Instrumentenschaft nach Anspruch 7, **dadurch gekennzeichnet, dass** die Auslaufschräge (5) zur Mitnehmerfläche (2) angeordnet ist.

9. Instrumentenschaft nach Anspruch 7, **dadurch gekennzeichnet, dass** die Auslaufschräge (5) zum Schaftende (1) angeordnet ist.

10. Instrumentenschaft nach Anspruch 1, **dadurch gekennzeichnet, dass** die Nut (4) als Ringnut ausgebildet ist.

11. Instrumentenschaft nach Anspruch 10, **dadurch gekennzeichnet, dass** die Nut (4) sich jeweils vom Übergang der Mitnehmerfläche (2) zu der zylindrischen Außenkontur des Schaftendes (1) aus erstreckt.

12. Instrumentenschaft nach einem der Ansprüche 1 bis 11, **dadurch gekennzeichnet, dass** das Verhältnis von radialer Einstichtiefe (b) zu dem Schaftdurchmesser (s) des Schaftendes (1) zwischen 0,05/2,35 bis 0,5/2,35 mm beträgt.

13. Instrumentenschaft nach Anspruch 12, **dadurch gekennzeichnet, dass** das Verhältnis von radialer Einstichtiefe (b) zu dem Schaftdurchmesser (s) des Schaftendes (1) zwischen 0,05/2,35 bis 0,2/2,35 mm beträgt.

14. Instrumentenschaft nach einem der Ansprüche 1 bis 13, **dadurch gekennzeichnet, dass** das Verhältnis von Einstichbreite (a) in Axialrichtung zur Länge (1) der Mitnehmerfläche in Axialrichtung zwischen 0,1/2,6 bis 0,8/2,6 mm beträgt.

15. Instrumentenschaft nach einem der Ansprüche 1 bis 14, **dadurch gekennzeichnet, dass** das Verhältnis von Einstichbreite (a) in Axialrichtung zur Länge (1) der Mitnehmerfläche in Axialrichtung zwischen 0,1/2,6 bis 0,4/2,6 mm beträgt.

16. Instrumentenschaft nach einem der Ansprüche 1 bis 15, **dadurch gekennzeichnet, dass** der Radius (R) der Nut (4) zwischen 0,15 und 0,2 mm beträgt.

17. Instrumentenschaft nach einem der Ansprüche 1 bis, 16, **dadurch gekennzeichnet, dass** zumindest der Bereich der Nut (4) mit einem durch Kugelstrahlen verdichteten Gefüge versehen ist.

## Claims

1. A dental instrument shaft for a rotating instrument made of a ceramic material and comprising a cylindrical shaft end (1) being provided with a flat driving area (2) arranged in parallel to the center axis (3) of the cylindrical shaft end (1), **characterized in that** a groove (4) having a cross-section shaped as a pitch circle is formed at the transition region of the driving area (2) to the cylindrical shaft end (1).

2. The instrument shaft of claim 1, **characterized in that** the groove (4) is formed straight.

3. The instrument shaft of claim 1 or 2, **characterized in that** the center axis of the groove (4) is arranged in parallel with the driving area (2).

4. The instrument shaft of one of claims 1 to 3, **characterized in that** the groove (4) is inserted radially into the end portion (7) of the driving area (2).

5. The instrument shaft of one of claims 1 to 3, **characterized in that** the groove (4) is inserted axially into the end portion (7) of the driving area (2).

6. The instrument shaft of one of claims 1 to 3, **characterized in that** the groove is inserted transversely in the end portion of the driving area (2) and the end portion (7) of the shaft end (1).

7. The instrument shaft of one of claims 1 to 6, **characterized in that** the groove (4) merges into at least one outlet bevel (5).

8. The instrument shaft of claim 7, **characterized in that** the outlet bevel (5) is arranged toward the driving area (2).

9. The instrument shaft of claim 7, **characterized in that** the outlet bevel (5) is arranged toward the shaft end (1).

10. The instrument shaft of claim 1, **characterized in that** the groove (4) is formed as an annular groove.

11. The instrument shaft of claim 10, **characterized in that** the groove (4) extends respectively from the transition region of the driving area (2) to the cylindrical circumference of the shaft end (1).

12. The instrument shaft of one of claims 1 to 11, **characterized in that** the relationship between the radial cut-in depth (b) and the shaft diameter (s) of the shaft end (1) lies between 0.05/2.35 and 0.5/2.35 mm.

13. The instrument shaft of one claim 12, **characterized in that** the relationship between the radial cut-in depth (b) and the shaft diameter (s) of the shaft end (1) lies between 0.05/2.35 and 0.2/2.35 mm.

14. The instrument shaft of one of claims 1 to 13, **characterized in that** the relationship between the cut-in width (a) in axial direction and the length (I) of the driving area in axial direction ranges from 0.1/2.6 to 0.8/2.6 mm.

15. The instrument shaft of one of claims 1 to 14, **characterized in that** the relationship between the cut-in width (a) in axial direction and the length (I) of the driving area in axial direction ranges from 0.1/2.6 to 0.4/2.6 mm.

16. The instrument shaft of one of claims 1 to 15, **characterized in that** the radius (R) of the groove (4) ranges between 0.15 and 0.2 mm.

17. The instrument shaft of one of claims 1 to 16, **characterized in that** at least the portion of the groove (4) is provided with a texture being densified by shot peening.

## Revendications

1. Axe d'instrument dentaire pour un instrument rotatif, qui est fabriqué en un matériau céramique et comporte une extrémité d'axe cylindrique (1) pourvue d'une surface d'entraînement plane (2) qui est disposée parallèlement à l'axe médian (3) de l'extrémité d'axe (1) cylindrique, **caractérisé en ce qu'**une rainure (4) pourvue d'une section transversale en forme de cercle primitif est réalisée sur la zone transitoire entre la surface d'entraînement (2) et l'extrémité d'axe (1) cylindrique.

2. Axe d'instrument selon la revendication 1, **caractérisé en ce que** la rainure (4) est réalisée droite.

3. Axe d'instrument selon la revendication 1 ou 2, **caractérisé en ce que** l'axe médian de la rainure (4) est disposé parallèlement à la surface d'entraînement (2).

4. Axe d'instrument selon l'une quelconque des revendications 1 à 3, **caractérisé en ce que** la rainure (4) est introduite radialement dans la zone d'extrémité de la surface d'entraînement (2).

5. Axe d'instrument selon l'une quelconque des revendications 1 à 3, **caractérisé en ce que** la rainure est introduite axialement dans la zone d'extrémité (7) de l'extrémité d'axe (1).

6. Axe d'instrument selon l'une quelconque des revendications 1 à 3, **caractérisé en ce que** la rainure est introduite en biais dans la zone d'extrémité de la surface d'entraînement (2) et dans la zone d'extrémité (7) de l'extrémité d'axe (1).

7. Axe d'instrument selon l'une quelconque des revendications 1 à 6, **caractérisé en ce que** la rainure (4) passe dans au moins un biais de sortie (5).

8. Axe d'instrument selon la revendication 7, **caractérisé en ce que** le biais de sortie (5) est disposé vers la surface d'entraînement (2).

9. Axe d'instrument selon la revendication 7, **caractérisé en ce que** le biais de sortie (5) est disposé vers l'extrémité d'axe (1).

10. Axe d'instrument selon la revendication 1, **caractérisé en ce que** la rainure (4) est réalisée comme une rainure annulaire.

11. Axe d'instrument selon la revendication 10, **caractérisé en ce que** la rainure (4) s'étend respectivement de la transition de la surface d'entraînement (2) au contour extérieur cylindrique de l'extrémité d'axe (1).

12. Axe d'instrument selon l'une quelconque des revendications 1 à 11, **caractérisé en ce que** le rapport entre la profondeur de piqûre (b) radiale et le diamètre d'axe (s) de l'extrémité d'axe (1) est compris entre 0,05/2,35 et 0,5/2,35 mm.

13. Axe d'instrument selon la revendication 12, **caractérisé en ce que** le rapport entre la profondeur de piqûre (b) radiale et le diamètre d'axe (s) de l'extrémité d'axe (1) est compris entre 0,05/2,35 et 0,2/2,35 mm.

14. Axe d'instrument selon l'une quelconque des revendications 1 à 13, **caractérisé en ce que** le rapport entre la profondeur de piqûre (a) dans le sens axial et la longueur (1) de la surface d'entraînement dans le sens axial est compris entre 0,1/2,6 et 0,8/2,6 mm.

15. Axe d'instrument selon l'une quelconque des revendications 1 à 14, **caractérisé en ce que** le rapport entre la largeur de piqûre (a) dans le sens axial et la longueur (I) de la surface d'entraînement dans le sens axial est compris entre 0,1/2,6 et 0,4/2,6 mm.

16. Axe d'instrument selon l'une quelconque des revendications 1 à 15, **caractérisé en ce que** le rayon (R) de la rainure (4) est compris entre 0,15 et 0,2 mm.

17. Axe d'instrument selon l'une quelconque des revendications 1 à 16, **caractérisé en ce qu'**au moins la zone de la rainure (4) est pourvue d'une structure comprimée par grenaillage.
